# EUROPEAN PATENT SPECIFICATION

(11) **EP 0 884 282 B1**
(45) Date of publication and mention of the grant of the patent: **08.09.2004**
(21) Application number: 98110579.4
(22) Date of filing: 09.06.1998
(51) Int. Cl.: C03B 9/40, C03B 9/16, F15B 15/00, F15B 15/22, G05D 7/06, F16K 27/02

(54) **A method and electropneumatic valve unit for supplying air under pressure to a forming machine, particularly for forming glass articles**
Verfahren und elektropneumatischer Ventilblock zur Versorgung einer Formmaschine, insbesondere zur Formung von Glasgegenstände, mit Pressluft
Procédé et unité de vannes électropneumatiques pour fournir de l'air sous pression à une machine de formation, en particulier une machine de fabrication d'objets en verre

(30) Priority: 10.06.1997 IT TO970502
(43) Date of publication of application: 16.12.1998
(73) Proprietor: BOTTERO S.p.A., 12010 Cuneo (IT)
(72) Inventor: Simondi, Carlo, 12010 Spinetta (IT); Armando, Lorenzo, 12100 Cuneo (IT); Viada, Bruno, 12010 Madonna Della Grazie (IT)
(74) Representative: Franzolin, Luigi

(56) References cited:
- EP-A- 0 620 197
- EP-A- 0 621 243
- US-A- 4 446 888
- US-A- 5 320 130
- I.J. KARASSIK ET. AL.: "Pump Handbook", 1986, MCGRAW-HLL BOOK COMPANY, NEW YORK

## Description

The present invention relates to a method for supplying air under pressure to a forming machine, particularly for forming glass articles.

In the glass industry, it is known to utilize forming machines, commonly known as I.S. machines, for the production of hollow glass articles, which machines comprise a plurality of operating units, each responsible for performing a particular operation.

The majority of such units comprise respective single- or double-acting pneumatic actuators which are commanded and controlled by means of a pneumatic valve unit disposed between a common source of supply to all the units and the actuators, close to the units themselves.

Normally, the pneumatic valve units comprise an electropneumatic valve block, in turn comprising a plurality of monostable discrete position slide valves, that is, of the "on-off" type and, for each slide valve itself, an associated electrical control valve which is electrically switchable to send a pneumatic slide valve switching signal to the associated slide valve itself.

The Pump Handbook, ed. I,J. Karassik et al, McGraw-Hill Book Company, New York 1986 teaches how to control the above valves using an open-loot control.

Known electropneumatic valve blocks further comprise, for each slide valve, an associated flow regulator valve unit interposed between a delivery outlet of the associated slide valve and the inlet of an associated pneumatic actuator and manually adjustable from the outside to vary the laws of motion of the associated linear actuator itself.

For some of the pneumatic actuators and some of the units having no pneumatic actuators such as, for example, the blower unit for displacing the mass of glass towards the surface of the forming press, where the air supplied must have a predetermined pressure value, a mechanical pressure regulator is normally associated with the said electropneumatic valve block, disposed close to the associated unit and manually operable by an operator. For each double-acting pneumatic actuator, the associated electropneumatic valve block further has an associated auxiliary valve for diverting the flow of air sent from the associated slide valve into one or other of the chambers of the actuator itself.

Known valve units of the above-described type, although universally utilized, suffer from the main disadvantage of comprising a large number of parts and, consequently, of having relatively high constructional and operating costs.

Moreover, in known valve units, the adjustment of the flow rate and/or the pressure of the air supplied which, as is known, is necessary whenever one or more of the working conditions varies or the characteristics of the molten glass utilized varies during the process of forming the articles, must be effected manually by acting directly on the regulating valve unit or its pressure regulators. However, with the regulation valve units and the various pressure regulators normally being disposed at the back of the various units, the operator is constrained to work in potentially dangerous regions and, in any case, in a hostile environment because of the high temperature and high noise levels as well as the particles, typically of carbon or oily nature, which are inevitably inhaled.

Finally, in known valve units, the adjustment of the flow rate and/or the pressure of the air supplied depends largely on the sensitivity and ability of the operators which, however, as is known, change from to one working shift to the other with the result that the various articles produced can have significant differences in quality.

Some of the problems explained above are currently resolved by utilizing valve units for the sole control of the pneumatic actuators, each comprising a proportional pneumatic solenoid valve and a closed-loop control device for the proportional solenoid valve itself. Control devices normally utilized comprise at least one pressure sensor and at least one position sensor associated with the pneumatic actuator or, alternatively, the slide of the proportional solenoid valve. Both sensors are connected to a central control unit which is able to emit control signals to the proportional solenoid valve as a function of the signals received from the sensors.

These latter valve units are difficult to use in that they have a large number of parts, are particularly complex from the constructional point of view and take a relatively long time to assemble and set up, as well as requiring constant maintenance. Moreover, some of the sensors useable are not easily available so that these valve units have relatively high costs which significantly increases the overall cost of the forming machine.

The object of the present invention is to provide a method for supplying air under pressure to a forming machine, which will allow the above-explained problems to be resolved in a simple and economic manner.

According to the present invention, there is provided a method for supplying air under pressure to a forming machine, particularly for forming glass articles as claimed in Claim 1.

The present invention further concerns an electropneumatic valve assembly for supplying air under pressure to a forming machine.

According to the present invention there is provided an electropneumatic valve assembly for supplying air under pressure to a forming machine, particularly for forming glass articles, as claimed in Claim 4.

The invention will now be described with reference to the attached drawings which illustrate a non-limitative embodiment thereof, in which:
Figure 1 illustrates, in side view, a preferred embodiment of the electropneumatic valve unit of the present invention;
Figure 2 is a section taken on the line II-II of Figure 1;
Figure 3 illustrates a variant of a detail of Figure 2;
Figure 4 is a section taken on the line IV-IV of Figure 2; and
Figure 5 is a flat development of an intermediate portion of a detail of Figure 2.

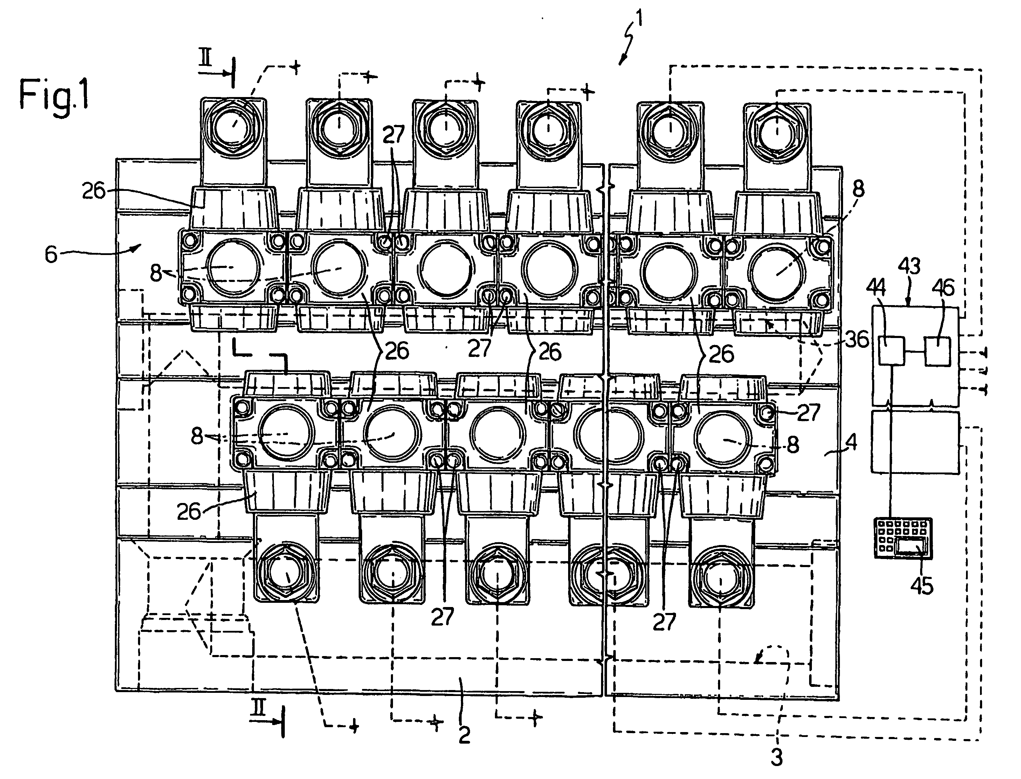

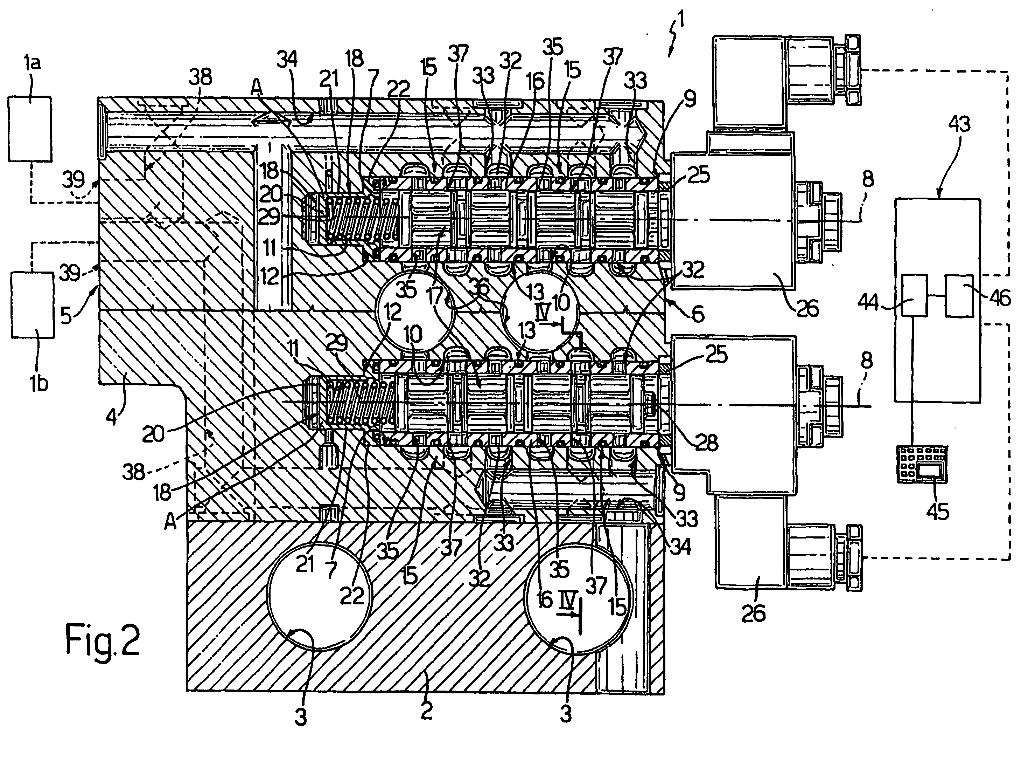

In Figures 1 and 2, the reference numeral 1 generally indicates an electropneumatic valve unit for an I.S. machine (not illustrated) for forming glass articles, comprising a plurality of known operating units or mechanisms 1a, 1b, only two of which are illustrated in Figure 2, each acting to perform a specific function. In particular, some of the operating units 1a, 1b comprise one or more pneumatic actuators (not illustrated), whilst other units 1a, 1b comprise blower units (not illustrated) operable to deliver, in use, a determined flow of air towards the forming presses of the machine to achieve, for example, a uniform distribution of the fused glass mass housed within the interior of the moulds or, alternatively, to cooperate in cooling the moulds themselves.

The electropneumatic valve unit 1 can be interposed between a supply source (not illustrated) of air under pressure and the said units 1a, 1b, and comprises a lower body 2 in which two air inlet ducts 3 are formed, both connected to a source (not illustrated) of air under pressure, and an upper body 4 fixedly connected to the lower body 2 and delimited laterally by two opposite flat surfaces indicated 5 and 6.

The body 4 is provided with two horizontal rows of superimposed seats 7 spaced transversely of one another, each of which has an associated horizontal axis 8 parallel to the axes 8 of the other seats 7, and is defined by an associated blind hole. Each blind hole has an inlet 9 formed in the surface 6 and comprises a first section 10 formed starting from the surface 6 itself, and a second terminal section 11 which has a smaller diameter than that of the section 10 and is joined to the section itself by an axial shoulder 12.

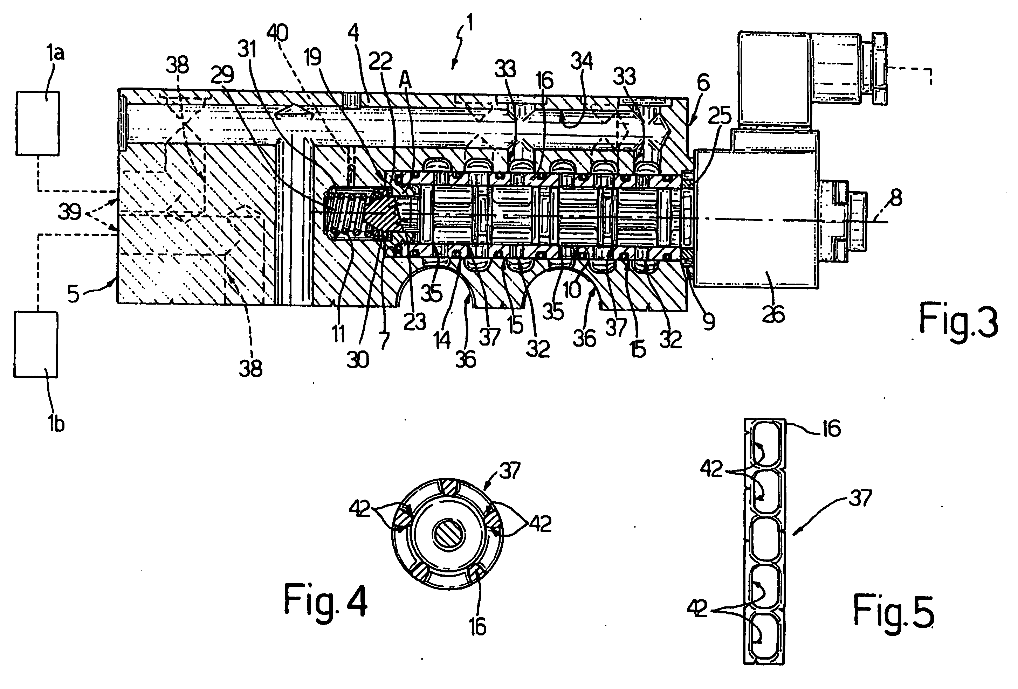

As illustrated in particular in Figures 2 and 3, the electropneumatic valve unit 1 further includes first and second monostable, normally closed proportional valve means indicated 13 and 14, for controlling the rate of flow of air to be supplied to some of the units 1a, 1b (Figure 2) and, respectively, for control of the pressure (Figure 3) of the air itself delivered, in use, to other units 1a, 1b. With the terms "monostable, normally closed proportional valves" are intended valves that in absence of external commands are disposed in a rest condition in which no flow of air is delivered to the units 1a, 1b.

Still with reference to Figures 2 and 3, each of the proportional valve means 13, 14 is housed in a respective seat 7 and comprises two continuously-positioned three-way proportional valves 15 disposed within the section 10 in positions aligned with one another along the respective axis 8.

The proportional valves 15 comprise respective tubular bodies or sleeves which are aligned and integral with one another to define a single tubular body 16, and respective moveable members or slides which are also aligned along the respective axis 8 and are integral with one another to define a single moveable member 17 which engages the tubular body 16 in an axially slideable, fluid-tight manner.

Still with reference to Figures 2 and 3, each seat 7 further houses an associated tubular body A which is selectable from two different tubular bodies indicated 18 and 19 (Figures 2 and 3), both disposed in contact against the said shoulder 12 to allow the production of the proportional valve means 13 for the control of the rate of flow of air (Figure 2) and, respectively, the proportional valve means 14 (Figure 3) for the control of the air pressure of the air flow to be supplied.

With reference to Figure 2, each body 18 is a cylindrical cup-shape body which has a bottom wall 20 facing the bottom wall of the associated blind hole, a cylindrical side wall 21 integral with the bottom wall 20 and disposed within the section 11, and a radial outer flange 22 which extends within the section 10 and contacts against the shoulder 12.

With reference to Figure 3, each body 19 differs from the body 18 by the fact that it does not have the walls 20 and 21, and by the fact that it includes a sleeve 23 integral with the flange 22 and extending within the section 10.

Regardless of the choice of one or other of the bodies 18 and 19, each tubular body 16 is axially locked against the associated flange 22 by a collar 25 of an electrical linear actuator 26, known per se, for actuation of the associated moveable member 17. Each electrical actuator 26 constitutes part of the respective valve means 13, 14, extends along the respective axis 8 and projects from the surface 6. Each actuator 26 is connected to the surface 6 by four screws 27 (Figure 1) and includes an output rod 28 acting directly on the moveable member 17 to exert, in use, a thrust action on the moveable member 17 itself against the thrust action exerted by a respective compression spring 29 extending partially within the section 11 and contacting directly in contact against the moveable member 17.

In particular, in the case of the valve means 13 (Figure 2), each spring 29 extends partially within the associated cup-shape body 18 between the wall 20 of the body 18 itself and a flat frontal surface of the respective moveable member 17, whilst in the case of the units 14 (Figure 3), each spring 29 extends within the section 11 between the bottom surface of the blind hole and a piston 30. The piston 30 constitutes an end portion of the respective member 17, is coupled to the section 11 in a fluid-tight manner and defines, together with the section 11 itself, a chamber 31 of variable volume.

The proportional valves 15 constituting part of this valve means 13, 14 are pneumatically connected together in parallel and comprise, in particular, respective inlet openings 32 for the air under pressure, which openings are connected via respective passages 33 to a common duct 34 connected in turn to one of the said inlet ducts 3.

The proportional valves 15 constituting part of this valve means 13, 14 further have respective discharge openings 35, each connected to one of the two discharge ducts 36 formed between the two rows of seats 7, and respective delivery openings 37. The delivery openings 37 are connected via respective passages to a single delivery duct 38 which has its outlet 39 formed in the surface 5 and connected, in use, to a respective operating unit 1a, 1b. In the case of the valve means 14, each duct 38 communicates with the respective chamber 31 through a respective' passage 40 (Figure 3).

As illustrated, and in Figures 4 and 5 in particular, the delivery outlets 37 of each valve 15 comprise a ring of slots 42, of which there are five in this particular case, each of which is circumferentially elongate, with a flat development of substantially rectangular shape with rounded corners (Figure 5).

Again with reference to Figures 1 and 2, the electric actuators 26 are electrically connected to an electronic command and control unit 43 operable to control the electric actuators 26 in an open loop solely on the basis of the optimum values of the parameters of the air flows to be delivered to the different units. In particular, here and below, the term "parameters of air flows" is understood to mean the rate of flow or the pressure of the various compressed air flows which must be supplied to the various operating units 1a, 1b.

With reference to Figures 1 and 2, the electronic unit 43 comprises a memory block 44 in which, by means of an operator-usable terminal 45, an optimum value of the respective flow parameter (rate of flow or pressure) is memorised for each operating unit 1a, 1b and for at least one operating condition of the operating unit A, B itself. The electronic unit 43 further includes a command and control block 46 which is connected to the block 44 and, solely on the basis of the memorised flow parameters, delivers in a known way a respective command signal to each electric actuator 26. Each command signal is independent of the other command signals and is insensitive to variations in the operating conditions of the respective units 1a, 1b as well as to variations in the characteristics of the glass mass supplied to the machine.

In the block 43 it is furthermore possible manually to memorize for each operating unit 1a, 1b, always by means of the keyboard 45, one or more different flow parameters from the respective flow parameter initially memorised, each defining the new optimum flow parameter for a different operating condition of the respective unit 1a, 1b and/or for a different condition of the glass mass being worked.

In use, knowing the technical characteristics of the different operating units, the actions or forces to be applied to the moveable parts of the units and/or the glass mass, the quantity of air necessary to accomplish a given function such as, for example, the cooling of the moulds being known, the optimum value of the parameter of the associated air flow is determined for each operating unit, after which these optimum values are memorised in the block 44 and the block 46, only and solely on the basis of each of these optimum values, sends a command signal to the corresponding electric actuator 26 which displaces the slides of the respective proportional valves 15 which deliver a respective air flow to the respective unit 1a, 1b. The air flows can be delivered simultaneously or not; the delivery order depends on the sequence of the operations for forming glass articles.

If, during operation of the machine, the operating conditions of one or more operating units 1a, 1b and/or the characteristics of the glass mass, and therefore the quality index of the finished, semi-finished or roughly formed product, should vary, the operator assigned to the machine uses the keyboard 45 to modify the corresponding values of the parameters of the first-memorised air flow so as to obtain new optimum parameters of the air flows, following which these new optimum values are stored in the block 44. During operation of the machine, the block 46 tests, for example, periodically, if a new optimum value different from the existing one has been memorised in the storage block 44 for each proportional valve and, if new memorisations are verified, it varies the respective command signals solely by such variations.

The different optimum values progressively memorised in the block 44 corresponding to specific operating conditions of the respective unit are maintained in the block 44 itself in such a way as progressively to create, for each operating unit, a set of optimum values advantageously re-useable, for example, during changes in production when similar operating conditions arise again.

From the above it is evident that the valve unit 1 described has, with respect to known valve units, the undoubted advantage of comprising a significantly reduced number of parts and therefore has, as well as extremely reduced weight and dimensions, relatively low production and maintenance costs.

That which has just been explained derives essentially from the fact that the proportional valves 15 provided are extremely simple from the constructional point of view and from the point of view of the particular manner of control of each of the proportional valves 15 themselves. In fact, each of the proportional valves 15 is controlled in open loop, that is to say without the use of any feedback control device and therefore in the total absence both of position sensors which may be associated with the slide of the proportional valve, and pressure sensors normally associated with the pneumatic actuator for actuating the respective operating unit. The total absence of feedback controls obviously results in a drastic simplification of the control unit for the electric actuators 26 of the proportional valves 15.

In practice, it has been possible to establish that, even in the absence of feedback controls for the proportional valves 15, results have been obtained in terms of the functional efficiency and reliability of the different operating units present which are fully acceptable and satisfactory and, therefore, one has a forming machine which, on the one hand makes it possible to obtain products of a quality comparable with products produced by means of known forming machines and, on the other, has extremely low production and maintenance costs which contribute to significantly increasing the competitiveness of such machines.

On the other hand, as far as the safety and the various adjustment operations are concerned, the valve unit 1 described allows, with respect to known mechanical arrangements, for the elimination of all the valve units for adjusting the flow disposed downstream of the conventional slide valves and, therefore, not only a reduction in production costs but also the elimination of all the problems tied to the manual mechanical adjustment as well as the problems relating to the continual presence of the operator in a hostile and, in particular, a potentially dangerous environment. In fact, in the valve unit 1 described, the control and adjustment of any of the proportional valves and, therefore of any operating unit, can be effected from a distance by operating directly on the keyboard 45 and possibly checking the results on a known monitoring device, not illustrated.

The fact that these corrections are effected by means of an electronic system makes it possible, then, to effect adjustments not only extremely accurately, but above all repeatably upon each change in production in that the different operating conditions of the various operating units are memorised in the memory block 44, with the consequent reduction in the time required for setting up the machine as it is possible faithfully to reproduce from time to time corrections or adjustments that have previously been effected.

The possibility of dynamically varying the rate of flow of air under pressure or the pressure of the air itself supplied to the different operating units makes it possible to effect movements and to impart actions or forces with laws more suited to the different production conditions and, therefore, to optimize production times and improve the quality of the product formed by achieving, for example, a better distribution of the glass mass worked.

Moreover, the use of proportional valves makes it possible to eliminate all the electric valves which, in the known valve blocks, are used to pneumatically control the said pneumatically-actuated control slide valves.

Again, the use of proportional valves regulating both the pressure and the rate of flow allows, still with respect to known arrangements, the elimination of all the pressure regulators and all the auxiliary valves associated with conventional valve blocks. It is, in particular, evident that the constructional characteristics of the proportional valves 15 makes it possible to utilize, in the case of double-acting actuators, a proportional valve 15 or a proportional valve means 13, 14 to deliver air to each chamber of the actuator. Because the proportional valves or proportional valve means 13, 14 are of the normally closed monostable type, they immediately interrupt the flow of air to and from the respective linear actuator with the immediate termination of the related mechanism whenever the electric supply to the actuators 26 fails and, therefore, in any emergency conditions.

The constructional characteristics of the proportional valve means 13 and 14, and, in particular, the fact that two proportional valves 15 connected together in parallel are provided in each seat 7 of the body 4, make it possible to supply the pneumatic actuators with any flow rate of fluid, although nevertheless still exercising a constant and precise control on the value of the flow rate or pressure.

The particular relative arrangement of the proportional valves 15 and the associated actuators 26 allows, finally, the easy and immediate removal of each electric valve 15 from the,associated seat.

From the above it is evident that the valve unit 1 described can have modifications and variations introduced thereto which do not depart from the present invention as defined in the claims. In particular, the valve unit 1 could include a different number of proportional valve means 13, 14 which, in turn, could be formed in a different manner from that described by way of example and could comprise, for example, a single proportional valve 15 not necessarily identical to that described, and having a different orientation, for example vertical.

## Claims

1. A method for supplying air under pressure to a forming machine, particularly for forming glass articles, comprising a plurality of pneumatic operating mechanisms (1a, 1b), each performing its own function and each supplied with an own flow of air which flow rate or air pressure are controlled in a proportional manner by using a respective proportional valve (13,14), the method comprising the steps of determining, value of a parameter of each air flow for at least one operating condition of the corresponding operating mechanism and the further steps of memorizing each said optimum value and delivering to the said proportional valve (13, 14) respective control signals, each depending only and solely on the associated said memorised value.

2. A method according to Claim 1, **characterised in that** each of the said memorised values is varied manually upon the variation in the operating conditions of the respective operating mechanism (1a, 1b) to obtain, for each said memorised value, a respective new optimum value, to memorize each said new optimum value and to deliver to the said proportional valve (13, 14) respective new control signals, each depending solely on the associated said new memorised value.

3. A method according to Claim 2, **characterised by** maintaining all the said values memorised in such a way as progressively to form, for each said operating mechanism (1a, 1b), a set of values, each corresponding to a specific operating condition of the operating mechanism (1a, 1b) itself.

4. A electropneumatic valve assembly (1) for supplying air under pressure to a forming machine, particularly for forming glass articles, comprising a plurality of pneumatic operating mechanisms (1a, 1b), each performing its own function, the electropneumatic valve assembly (1) including, for each of the said operating mechanism (1a, 1b), at least one proportional valve (13, 14) and a control unit (43) for the at least one proportional valve (13, 14) to deliver, in use, a respective proportionally controlled flow of air to each said operating mechanism (1a, 1b); and being **characterised in that** the said control unit (43) includes first memory means (44) for memorizing, for each air flow and for at least one operating condition of each of the said operating mechanisms (1a, 1b), a value of a parameter of the respective air flow, and control means (46) operable to deliver to the said proportional valve means (13, 14) respective control signals, each depending only and solely on the respective memorised value;

5. An electropneumatic valve assembly according to Claim 4, **characterised in that** the said control unit (43) further includes acquisition means (45) for acquiring, at least one new value of the parameter, and second memory means (44) for memorizing the said new values; the said control means (46) being operable to deliver, for each said new value, a control signal for the respective proportional valve (13, 14).

6. An electropneumatic valve assembly according to Claim 5, **characterised in that** the said acquisition means comprise keyboard means (45) operable to allow an operator manually to set the said new optimum values.

7. An electropneumatic valve assembly according to any of Claims from 4 to 6, **characterised in that** the said valve means (13, 14) comprise, for each said operating mechanism (1a, 1b), at least one proportional valve (15) for regulation of the flow delivered to the respective operating mechanism (1a, 1b).

8. An electropneumatic valve assembly according to any of Claims from 4 to 7, **characterised in that** the said valve means (13, 14) include at least one proportional valve (15) for each said operating mechanism (1a, 1b); the said proportional valve (15) being a pressure regulating valve.

9. An electropneumatic valve assembly according to Claim 7 or Claim 8, **characterised in that** each of the said proportional valves (15) comprises a respective moveable member (17) and a linear electric actuator (26) disposed in alignment with the respective moveable member (17) and acting directly on the moveable member (17) itself.

10. An electropneumatic valve assembly according to Claim 9, **characterised in that** the said electric actuators (26) and the said moveable members (17) are aligned with one another along respective, substantially horizontal, parallel axes (8).

11. An electropneumatic valve assembly according to any of Claims from 7 to 10, **characterised in that** each of the said proportional valves (15) includes respective openings (32, 35, 37) for the passage of air, at least the delivery outlets (37) comprising a plurality of circumferentially-elongated apertures (42).

12. An electropneumatic valve assembly according to any of Claims from 7 to 11, **characterised in that** it includes a body (4) having a plurality of seats (7), each of which communicates with a respective said operating mechanism and houses at least one of the said proportional valves (15).

13. An electropneumatic valve assembly according to Claim 12, **characterised in that** each of the said seats (7) houses two of the said proportional valves (15).

14. An electropneumatic valve assembly according to Claim 13, **characterised in that** the said two proportional valves (15) are aligned with one another.

15. An electropneumatic valve assembly according to Claim 14, **characterised in that** the moveable members (17) of the said two proportional valves (15) are fixedly connected together and moved by the same electric actuator (26).

16. An electropneumatic valve assembly according to any of Claims from 13 to 15, **characterised in that** the said two proportional valves (15) are pneumatically connected together in parallel.

17. An electropneumatic valve assembly according to Claims 9 and 12, **characterised in that** it further includes, for each of the said proportional valves (15), a single resilient biasing element (29) housed within the respective said seat (7) for exerting, in use, an action against that exerted by the respective said electric actuator (26) and such as to hold the respective proportional valve (15) in a closure condition in the absence of the action exerted by the respective actuator (26).

18. An electropneumatic valve assembly according to Claims 9 and 12, **characterised in that** the said electric actuators (26) are connected to a first lateral surface (6) of the said body (4) and extend out from the body (4) itself; the body (4) having a plurality of outlets (39), each for a respective flow of air under pressure, the said outlets (39) being formed in a second lateral surface (5) opposite the said first surface (6).

## Patentansprüche

1. Verfahren zum Zuführen von Druckluft an eine Formmaschine, insbesondere zum Formen von Glasgegenständen, mit einer Mehrzahl von pneumatischen Betriebsmechanismen (1a, 1b), die jeweils ihre eigene Funktion ausführen und jeweils mit Ihrem eigenen Luftstrom versorgt werden, wobei die Flussrate oder Luftdruck proportional gesteuert werden mittels eines jeweiligen Proportionalventils (13, 14), wobei das Verfahren die Schritte des Feststellens eines Werts eines Parameters jedes Luftstroms für mindestens einen Betriebszustand des entsprechenden Betriebsmechanismus sowie die weiteren Schritte des Speicherns jedes genannten, optimalen Werts und Zuführens von jeweiligen Steuersignalen, von denen jedes ganz allein von dem zugeordneten, genannten, gespeicherten Wert abhängt, an das genannte Proportionalventil (13, 14) aufweist.

2. Verfahren nach Anspruch 1, **dadurch gekennzeichnet, dass** jeder der gespeicherten Werte bei Variation der Betriebsbedingungen des entsprechenden Betriebsmechanismus (1a, 1b) manuell variiert wird, um für jeden genannten, gespeicherten Wert einen jeweiligen neuen optimalen Wert zu erhalten, um jeden genannten, neuen, optimalen Wert zu speichern und dem genannten Proportionalventil (13, 14) jeweils neue Steuersignale zuzuführen, die jeweils nur von dem zugehörigen, genannten neuen gespeicherten Wert abhängen.

3. Verfahren nach Anspruch 2, **gekennzeichnet durch** Beibehalten aller genannten Werte, die so gespeichert sind, dass sie progressiv für jeden genannten Betriebsmechanismus (1a, 1b) einen Satz von Werten bilden, von denen jeder einem spezifischen Betriebszustand des Betriebsmechanismus (1a, 1b) selbst entspricht.

4. Elektropneumatische Ventilanordnung (1) zur Zufuhr von Druckluft an eine Formmaschine, insbesondere zum Formen von Glasgegenständen, mit einer Mehrzahl von pneumatischen Betriebsmechanismen (1a, 1b), die jeweils ihre eigene Funktion ausführen, wobei die elektropneumatische Ventilanordnung (1) für jeden der genannten Betriebsmechanismen (1a, 1b) mindestens ein Proportionalventil (13, 14) und eine Steuereinheit (43) für das mindestens eine Proportionalventil (13, 14) beinhaltet, um bei Verwendung einen jeweiligen, proportional gesteuerten Luftstrom an jeden Betriebsmechanismus (1a, 1b) zuzuführen; und **dadurch gekennzeichnet, dass** die genannte Steuereinheit (43) eine erste Speichereinrichtung (44) zum Speichern eines Werts eines Parameters des jeweiligen Luftstroms für jeden Luftstrom und für mindestens einen Betriebszustand jedes der genannten Betriebsmechanismen (1a, 1b), und eine Steuereinrichtung (46) beinhaltet, die so betrieben werden kann, dass sie an die genannte Proportionalventileinrichtung (13, 14) jeweilige Steuersignale liefert, die jeweils ganz allein von dem entsprechenden gespeicherten Wert abhängen.

5. Elektropneumatische Ventilanordnung nach Anspruch 4, **dadurch gekennzeichnet, dass** die genannte Steuereinheit (43) weiterhin eine Erfassungseinrichtung (45) aufweist zum Erfassen mindestens eines neuen Werts des Parameters, und eine zweite Speichereinrichtung (44) zum Speichern der neuen Werte, wobei die Steuereinrichtung (46) so betrieben werden kann, dass sie für jeden neuen Wert ein Steuersignal für das entsprechende Proportionalventil (13, 14) liefert.

6. Elektropneumatische Ventilanordnung nach Anspruch 5, **dadurch gekennzeichnet, dass** die Erfassungseinrichtung eine Tastatureinrichtung (45) aufweist, die so betrieben werden kann, dass sie es einem Betreiber (Operator) erlaubt, die neuen optimalen Werte manuell einzustellen.

7. Elektropneumatische Ventilanordnung nach einem der Ansprüche 4 bis 6, **dadurch gekennzeichnet, dass** die Ventileinrichtungen (13, 14) für jeden Betriebsmechanismus (1a, 1b) mindestens ein Proportionalventil (15) aufweisen zum Regulieren des Stroms, der dem entsprechenden Betriebsmechanismus (1a, 1b) zugeführt wird.

8. Elektropneumatische Ventilanordnung nach einem der Ansprüche 4 bis 7, **dadurch gekennzeichnet, dass** die Ventileinrichtungen (13, 14) mindestens ein Proportionalventil (15) für jeden genannten Betriebsmechanismus (1a, 1b) beinhalten; wobei das Proportionalventil (15) ein Druckregelventil ist.

9. Elektropneumatische Ventilanordnung nach Anspruch 7 oder 8, **dadurch gekennzeichnet, dass** jedes der Proportionalventlie (15) ein jeweiliges bewegliches Element (17) und ein lineares elektrisches Betätigungselement (26) aufweist, das so angeordnet ist, dass es mit dem entsprechenden beweglichen Element (17) ausgerichtet ist und direkt auf das bewegliche Element (17) selbst wirkt.

10. Elektropneumatische Ventilanordnung nach Anspruch 9, **dadurch gekennzeichnet, dass** die elektrischen Betätigungselemente (26) und die beweglichen Elemente (17) zueinander entlang entsprechenden, im wesentlichen horizontalen, parallelen Achsen (8) ausgerichtet sind.

11. Elektropneumatische Ventilanordnung nach einem der Ansprüche 7 bis 10, **dadurch gekennzeichnet, dass** jedes der Proportionalventile (15) entsprechende Öffnungen (32, 35, 37) für den Durchtritt von Luft beinhaltet, wobei zumindest die Zufuhrauslässe (37) eine Mehrzahl von In Umfangsrichtung länglich ausgebildeten Öffnungen (42) aufweisen.

12. Elektropneumatische Ventilanordnung nach einem der Ansprüche 7 bis 11, **dadurch gekennzeichnet, dass** sie einen Körper (4) mit einer Mehrzahl von Aufnahmen (7) beinhaltet, von denen jeder mit einem entsprechenden Betätigungsmechanismus in Verbindung steht und mindestens eines der Proportionalventile (15) aufnimmt.

13. Elektropneumatische Ventlianordnung nach Anspruch 12, **dadurch gekennzeichnet, dass** jede der Aufnahmen (7) zwei der genannten Proportionalventile (15) aufnimmt.

14. Elektropneumatische Ventilanordnung nach Anspruch 13, **dadurch gekennzeichnet, dass** die zwei Proportionalventile (15) miteinander ausgerichtet sind.

15. Elektropneumatische Ventilanordnung nach Anspruch 14, **dadurch gekennzeichnet, dass** die beweglichen Elemente (17) der zwei Proportionalventile (15) fest miteinander verbunden sind und von demselben elektrischen Betätigungselement (26) bewegt werden.

16. Elektropneumatische Ventilanordnung nach einem der Ansprüche 13 bis 15, **dadurch gekennzeichnet, dass** die zwei Proportionalventile (15) parallel zueinander pneumatisch miteinander verbunden sind.

17. Elektropneumatische Ventilanordnung nach den Ansprüchen 9 und 12, **dadurch gekennzeichnet, dass** sie weiterhin für jedes der Proportionalventile (15) ein einzelnes flexibles Vorspannelement (29) beinhaltet, das in der jeweiligen, genannten Aufnahme (7) untergebracht ist, um bei Verwendung eine Wirkung gegen diejenige auszuüben, die von dem jeweiligen genannten, elektrischen Betätigungselement (26) ausgeführt wird, und so, dass das jeweilige Proportionalventil (15) in einem Schließzustand gehalten wird, wenn die von dem jeweiligen Betätigungselement (26) ausgeübte Kraft nicht vorhanden ist.

18. Elektropneumatische Ventilanordnung nach den Ansprüchen 9 und 12, **dadurch gekennzeichnet, dass** die genannten, elektrischen Betätigungselemente (26) mit einer ersten Seitenfläche (6) des Körpers (4) verbunden sind und sich aus dem Körper (4) selbst heraus erstrecken; wobei der Körper (4) eine Mehrzahl von Auslässen (39) hat, jeder für einen jeweiligen Druckluftstrom, wobei die Auslässe (39) in einer zweiten Seitenfläche (5) gegenüber der genannten, ersten Fläche (6) gebildet sind.

## Revendications

1. Procédé d'alimentation en air sous pression d'une machine de mise en forme, particulièrement pour la mise en forme d'articles en verre, comprenant plusieurs mécanismes opérateurs pneumatiques (1a, 1b) qui exécutent chacun leur fonction propre et sont alimentés chacun par un courant propre d'air dont le débit ou la pression est commandé de manière proportionnelle au moyen d'une vanne proportionnelle respective (13, 14), ce procédé comprenant les étapes de détermination d'une valeur d'un paramètre de chaque courant d'air pour au moins un état de fonctionnement du mécanisme opérateur correspondant, et les étapes supplémentaires de mise en mémoire de chaque valeur optimale et d'envoi à la vanne proportionnelle (13, 14) de signaux respectifs de commande qui dépendent chacun uniquement de la valeur associée mise en mémoire.

2. Procédé selon la revendication 1, **caractérisé par le fait que** chacune des valeurs mises en mémoire est modifiée manuellement d'après la variation des états de fonctionnement du mécanisme opérateur respectif (1a, 1b) pour l'obtention, pour chaque valeur mise en mémoire, d'une nouvelle valeur optimale respective, pour la mise en mémoire de chaque nouvelle valeur optimale et pour l'envoi à la vanne proportionnelle (13, 14) de nouveaux signaux de commande respectifs qui dépendent chacun uniquement de la nouvelle valeur associée mise en mémoire.

3. Procédé selon la revendication 2, **caractérisé par** la conservation de toutes les valeurs mises en mémoire de manière à former progressivement pour chaque mécanisme opérateur (1a, 1b) un ensemble de valeurs correspondant chacune à un état particulier de fonctionnement du mécanisme opérateur (1a, 1b) lui-même.

4. Ensemble de vannes électropneumatiques (1) pour l'alimentation en air sous pression d'une machine de mise en forme, particulièrement pour la mise en forme d'articles en verre, comprenant plusieurs mécanismes opérateurs pneumatiques (1a, 1b) qui exécutent chacun leur fonction propre, cet ensemble de vannes électropneumatiques (1) comportant pour chacun des mécanismes opérateurs (1a, 1b) au moins une vanne proportionnelle (13, 14) et un organe de commande (43) pour la ou les vannes proportionnelles (13, 14) pour l'envoi, en service, d'un courant d'air commandé proportionnellement respectif à chaque mécanisme opérateur (1a, 1b), et **caractérisé par le fait que** l'organe de commande (43) comprend une première mémoire (44) pour la mise en mémoire, pour chaque courant d'air et pour au moins un état de fonctionnement de chacun des mécanismes opérateurs (1a, 1b), d'une valeur d'un paramètre du courant d'air respectif, et un moyen de commande (46) destiné à envoyer aux vannes proportionnelles (13, 14) des signaux respectifs de commande qui dépendent chacun uniquement de la valeur respective mise en mémoire.

5. Ensemble de vannes électropneumatiques selon la revendication 4, **caractérisé par le fait que** l'organe de commande (43) comprend en outre un moyen d'acquisition (45) pour l'acquisition d'au moins une nouvelle valeur du paramètre, et une deuxième mémoire (44) pour la mise en mémoire des nouvelles valeurs, le moyen de commande (46) étant destiné à envoyer pour chaque nouvelle valeur un signal de commande pour la vanne proportionnelle respective (13, 14).

6. Ensemble de vannes électropneumatiques selon la revendication 5, **caractérisé par le fait que** le moyen d'acquisition comprend un clavier (4) qui permet à un opérateur de fixer manuellement les nouvelles valeurs optimales.

7. Ensemble de vannes électropneumatiques selon l'une des revendications 4 à 6, **caractérisé par le fait que** les vannes (13, 14) comprennent pour chaque mécanisme opérateur (1a, 1b) au moins une vanne proportionnelle (15) pour la régulation du courant envoyé au mécanisme opérateur respectif (1a, 1b).

8. Ensemble de vannes électropneumatiques selon l'une des revendications 4 à 7, **caractérisé par le fait que** les vannes (13, 14) comprennent au moins une vanne proportionnelle (15) pour chaque mécanisme opérateur (1a, 1b), ladite vanne proportionnelle (15) étant une vanne régulatrice de pression.

9. Ensemble de vannes électropneumatiques selon l'une des revendications 7 et 8, **caractérisé par le fait que** chacune des vannes proportionnelles (15) comprend un élément mobile respectif (17) et un actionneur électrique linéaire (26) aligné avec l'élément mobile respectif (17) et agissant directement sur celui-ci.

10. Ensemble de vannes électropneumatiques selon la revendication 9, **caractérisé par le fait que** les actionneurs électriques (26) et les éléments mobiles (17) sont alignés entre eux le long d'axes respectifs parallèles sensiblement horizontaux (8).

11. Ensemble de vannes électropneumatiques selon l'une des revendications 7 à 10, **caractérisé par le fait que** chacune des vannes proportionnelles (15) présente des ouvertures respectives (32, 35, 37) pour le passage d'air, au moins les sorties débitrices (37) comprenant plusieurs ouvertures allongées circonférentiellement (42).

12. Ensemble de vannes électropneumatiques selon l'une des revendications 7 à 11, **caractérisé par le fait qu'**il comporte un corps (4) ayant une série de sièges (7) qui communiquent chacun avec un mécanisme opérateur respectif et abritent chacun au moins une des vannes proportionnelles (15).

13. Ensemble de vannes électropneumatiques selon la revendication 12, **caractérisé par le fait que** chacun des sièges (7) abrite deux des vannes proportionnelles (15).

14. Ensemble de vannes électropneumatiques selon la revendication 13, **caractérisé par le fait que** les deux vannes proportionnelles (15) sont alignées.

15. Ensemble de vannes électropneumatiques selon la revendication 14, **caractérisé par le fait que** les éléments mobiles (17) des deux vannes proportionnelles (15) sont joints de manière fixe et mus par le même actionneur électrique (26).

16. Ensemble de vannes électropneumatiques selon l'une des revendications 13 à 15, **caractérisé par le fait que** les deux vannes proportionnelles (15) sont montées pneumatiquement en parallèle.

17. Ensemble de vannes électropneumatiques selon les revendications 9 et 12, **caractérisé par le fait qu'**il comporte en outre pour chacune des vannes proportionnelles (15) un élément élastique unique de charge (29) logé dans le siège respectif (7) et destiné à exercer en service une action opposée à celle exercée par l'actionneur électrique respectif (26) afin de maintenir la vanne proportionnelle respective (15) dans un état fermé en l'absence de l'action exercée par l'actionneur respectif (26).

18. Ensemble de vannes électropneumatiques selon les revendications 9 et 12, **caractérisé par le fait que** les actionneurs électriques (26) sont joints à une première surface latérale (6) du corps (4) et s'étendent hors du corps (4) lui-même, le corps (4) ayant une série de sorties (39), chacune pour un courant respectif d'air sous pression, ces sorties (39) étant formées dans une deuxième surface latérale (5) opposée à la première (6).
